**Europäisches Patentamt**

(19) **European Patent Office**

**Office européen des brevets**

(11) Numéro de publication: **0 048 670**
**B1**

(12) **FASCICULE DE BREVET EUROPEEN**

(45) Date de publication du fascicule du brevet:
**02.05.85**

(51) Int. Cl.⁴: **B 01 J 23/88, C 10 G 45/08**

(21) Numéro de dépôt: **81401448.6**

(22) Date de dépôt: **17.09.81**

(54) **Catalyseurs d'hydrotraitement d'hydrocarbures et application desdits catalyseurs.**

(30) Priorité: **19.09.80 FR 8020219**

(43) Date de publication de la demande:
**31.03.82 Bulletin 82/13**

(45) Mention de la délivrance du brevet:
**02.05.85 Bulletin 85/18**

(84) Etats contractants désignés:
**BE DE GB IT NL**

(56) Documents cités:
**FR - A - 2 187 883**
**FR - A - 2 247 528**
**FR - A - 2 424 062**

**Le dossier contient des informations techniques présentées postérieurement au dépôt de la demande et ne figurant pas dans le présent fascicule.**

(73) Titulaire: **COMPAGNIE FRANCAISE DE RAFFINAGE Société anonyme dite:, 5, rue Michel-Ange, F-75781 Paris Cedex 16 (FR)**

(72) Inventeur: **Muller, Alain, 17, Avenue Foch, F-76600 Le Havre (FR)**
Inventeur: **Triki, André, 10 rue de Savoie, F-76290 Montivilliers (FR)**

(74) Mandataire: **Jolly, Jean-Pierre et al, Cabinet BROT 83, rue d'Amsterdam, F-75008 Paris (FR)**

## Description

La présente invention concerne des catalyseurs d'hydrotraitement d'hydrocarbures. Elle concerne notamment l'application desdits catalyseurs à l'hydrotraitement de charges d'hydrocarbures ayant un point d'ébullition supérieur à 350 °C sous la pression atmosphérique.

Les catalyseurs composés d'un support d'alumine sur lequel est déposé au moins un métal des groupes VIII et VIA sont bien connus. Ils servent notamment à l'hydrodésulfuration de charges d'hydrocarbures, provenant par exemple du fractionnement du pétrole brut, par distillation sous pression atmosphérique, puis sous pression réduite. Ce fractionnement conduit à l'obtention d'une gamme de produits allant des essences aux résidus de distillation sous pression réduite, appelés ci-après résidus sous vide, en passant par les gazoles. Ces produits doivent être désulfurés avant emploi comme carburant ou comme combustible.

De tels catalyseurs sont notamment constitués par un support en oxyde minéral réfractaire tel que l'alumine, sur lequel sont déposés du cobalt et du molybdène. La durée de vie de tels cataly-seurs est limitée par un empoisonnement progressif de ceux-ci par le soufre, mais aussi, selon la nature de la charge, par des produits azotés, des métaux ou des produits de haut poids moléculaire favorisant la formation de coke. C'est le cas, notamment, pour les coupes les plus lourdes, telles que les résidus de distillation sous pression atmosphérique ou sous vide, dont la valorisation devient de plus en plus importante, compte tenu des conditions économiques actuelles du marché du pétrole brut.

Il est donc particulièrement intéressant d'avoir un catalyseur résistant à cet empoisonnement.

Le but de la présente invention est par conséquent l'obtention de catalyseurs d'hydrotraitement, utilisables particulièrement dans l'hydrodésulfuration et l'hydrodémétallisation de charges d'hydrocarbures, notamment de résidus de distillation sous pression atmosphérique ou sous vide.

FR-A-2 187 883 décrit des catalyseurs d'hydrodésulfuration d'une huile brute, comprenant un support en alumine sur lequel est déposé au moins un métal des Groupes VI et VIII de la Classification Périodique, notamment le molybdène et le cobalt et/ou le nickel.

C'est à ce type de catalyseurs que s'intéresse la présente invention.

En effet, sans qu'elle puisse avancer une explication scientifique de cette propriété, la Demanderesse a établi que de tels catalyseurs, présentant un spectre particulier, lors de leur étude par spectroscopie RAMAN, sont de très bons catalyseurs d'hydrotraitement d'hydrocarbures et notamment d'hydrodésulfuration et d'hydrodémétallisation.

L'invention a donc pour objet des catalyseurs d'hydrotraitement d'hydrocarbures comprenant:

a) un support en oxyde minéral réfractaire;
b) sous forme libre ou combinée, de 0,5 à 30% en poids, rapporté au poids total du catalyseur, de molybdène;
c) sous forme libre ou combinée, de 0,5 à 10% en poids, rapporté au poids total du catalyseur, d'au moins un métal choisi dans le groupe constitué par le nickel et le cobalt;

lesdits catalyseurs étant caractérisés en ce que les raies du spectre obtenu en les étudiant par spectroscopie Raman conventionnelle et de fréquences allant de 900 à 1020 cm$^{-1}$ ont la distribution suivante:

– 25% au plus ont une fréquence comprise entre 900 et 930 cm$^{-1}$,
– au moins 40% ont une fréquence comprise entre 930 et 955 cm$^{-1}$,
– 40% au plus ont une fréquence comprise entre 955 et 1020 cm$^{-1}$.

Par étude par microscopie Raman, la distribution ci-dessus correspond à la répartition suivante:

– 25% au plus des raies ont une fréquence comprise entre 900 et 930 cm$^{-1}$,
– au moins 50% des raies ont une fréquence comprise entre 930 et 955 cm$^{-1}$,
– 30% au plus des raies ont une fréquence comprise entre 955 cm$^{-1}$ et 1020 cm$^{-1}$.

Ces définitions du spectre RAMAN du catalyseur décrivent en fait un pic fin dans la zone de fréquence comprise entre 900 et 1020 cm$^{-1}$ et qui correspond aux atomes de molybdène.

La Demanderesse a constaté que cette forme particulière du spectre correspondait à des catalyseurs particulièrement intéressants en hydrodésulfuration et en hydrodémétallisation de charges d'hydrocarbures.

L'invention concerne plus particulièrement les catalyseurs définis ci-dessus et dans lesquels le support a une surface spécifique comprise entre 15 et 500 m² par gramme et un volume poreux spécifique compris entre 0,1 et 2 cm³ par gramme et, de préférence, compris respectivement entre 100 et 400 m² par gramme et 0,3 et 1,2 cm³ par gramme.

Le support du catalyseur selon l'invention peut être notamment l'alumine ou un aluminosilicate. Il peut s'agir d'une alumine pouvant contenir jusqu'à 70% en poids de silice.

Les catalyseurs selon l'invention contiennent, de préférence, rapporté au poids total du catalyseur, de 5 à 25% en poids de molybdène et de 1 à 8% en poids d'au moins un métal choisi dans le groupe constitué par le nickel et le cobalt.

Les catalyseurs selon l'invention peuvent être préparés par une imprégnation du support par au moins une solution contenant au moins un élément choisi dans le groupe constitué par le molybdène, le nickel et le cobalt, ladite imprégnation étant suivie d'une calcination à une température comprise entre 300 et 700 °C et, de préférence, entre 450 et 650 °C.

Les catalyseurs selon l'invention peuvent être notamment utilisés pour l'hydrotraitement de charges d'hydrocarbures provenant de la distillation du pétrole brut et ayant un point d'ébullition, sous la pression atmosphérique, égal ou supérieur à 350 °C, en vue de désulfurer et de démétalliser ces charges.

L'opération d'hydrotraitement peut s'effectuer dans les conditions suivantes:
- température comprise entre 340 et 440 °C,
- pression comprise entre 30 et 200 bars,
- rapport volumique $\dfrac{\text{hydrogène}}{\text{hydrocarbures}}$ compris entre 50 et 2000 normaux-litres/litre,
- vitesse volumique horaire de la charge, mesurée à l'état liquide, de préférence comprise entre 0,2 et 4 (la vitesse volumique horaire étant le volume de liquide passant par heure sur une unité de volume de catalyseur).

Préalablement aux opérations de désulfuration des charges d'hydrocarbures, il peut être avantageux de présulfurer les catalyseurs en présence d'hydrogène par des procédés connus; en général, après mise sous pression d'hydrogène entre 50 et 200 °C, on monte la température jusqu'à environ 350 à 400 °C, en faisant passer sur le catalyseur des composés susceptibles de libérer du soufre, tels que des mélanges d'hydrogène et de sulfure d'hydrogène, des mercaptans ou du sulfure de carbone, ou même un gas-oil contenant du soufre.

Les exemples qui suivent, et qui n'ont aucun caractère limitatif, illustrent l'invention.

L'exemple 1 concerne la préparation de catalyseurs A et B selon l'invention.

L'exemple 2 concerne des essais d'hydrodésulfuration d'une charge d'hydrocarbures à l'aide des catalyseurs A et B préparés dans l'exemple 1 et de catalyseurs commerciaux témoins T1 et T2.

Les huit figures annexées seront explicitées au cours de la description de ces exemples.

Exemple 1

Cet exemple concerne la préparation de catalyseurs A et B selon l'invention.

On ajoute, sous forte agitation, 7,04 l d'une solution aqueuse d'aluminate de sodium, contenant 204 g d'aluminate de sodium, à 0,6 l d'une solution aqueuse de chlorure d'aluminium, contenant 200 g de chlorure d'aluminium.

Le gel obtenu est filtré, lavé à l'eau, puis à l'acétone. Le gel est ensuite séché pendant 16 heures à 120 °C. On obtient ainsi un xérogel contenant environ 25% d'eau.

Le xérogel est broyé, puis on ajoute à la poudre obtenue une solution aqueuse d'orthosilicate d'éthyle, en quantité telle que l'alumine finale obtenue contienne 5% de $SiO_2$.

Après addition d'eau pour obtenir une pâte, on extrude l'alumine.

Les extrudés obtenus sont séchés pendant 16 heures, à 120 °C, puis calcinés pendant 2 heures, à 600 °C.

On imprègne les extrudés par des solutions alcooliques de nitrate de cobalt et d'acétylacétonate de molybdène, en quantités telles que le catalyseur final contienne environ 4% en poids d'oxyde de cobalt et environ 20% en poids d'oxyde de molybdène.

Les extrudés imprégnés par ces solutions sont séchés pendant 16 heures, à 120 °C, et calcinés pendant 2 heures, à 550 °C.

On obtient ainsi les catalyseurs A et B selon l'invention, dont la composition et les caractéristiques sont données ci-après dans le Tableau I, ainsi que celles de catalyseurs témoins commerciaux, T1 et T2, qui seront testés dans l'exemple 2 avec les catalyseurs A et B.

Tableau 1

| Catalyseur | Composition (% en poids) | | | Caracteristiques | |
| | Co O | Mo $O_3$ | Si $O_2$ | surface $m^2/g$ | volume poreux $cm^3/g$ |
| --- | --- | --- | --- | --- | --- |
| T1 | 3,6 | 12 | 0,8 | 256 | 0,58 |
| T2 | 4,7 | 16 | 0,8 | 263 | 0,45 |
| A | 3,6 | 19 | 5 | 254 | 0,80 |
| B | 3,6 | 19 | 5 | 259 | 0,88 |

Ces catalyseurs ont été étudiés par spectroscopie RAMAN conventionnelle et par microscopie RAMAN.

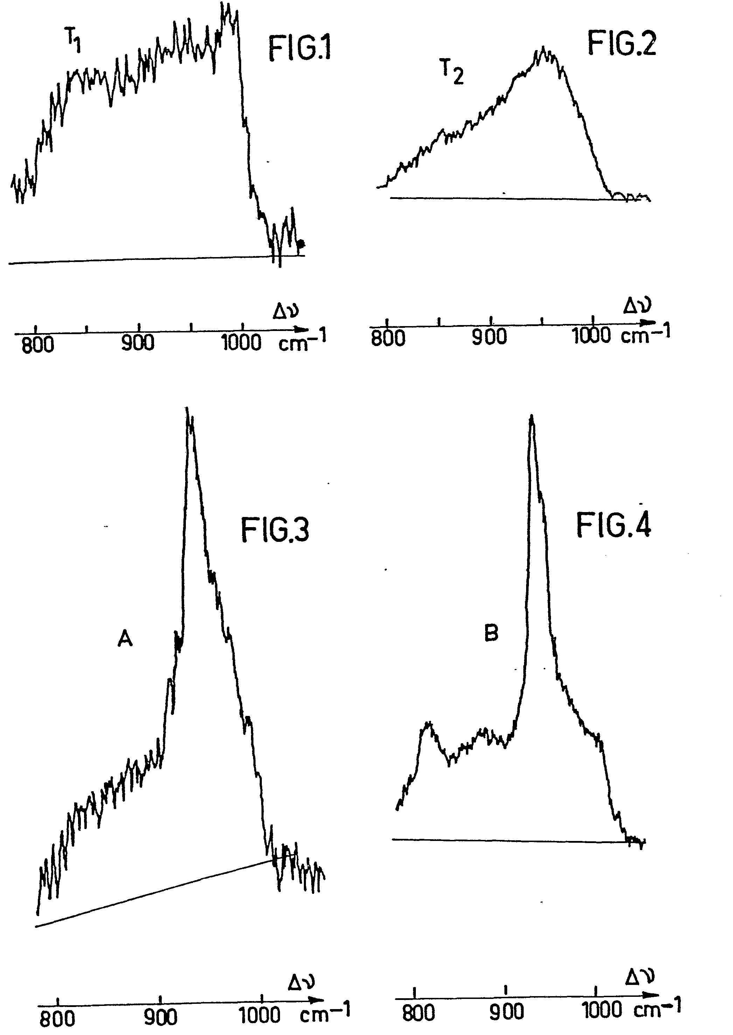

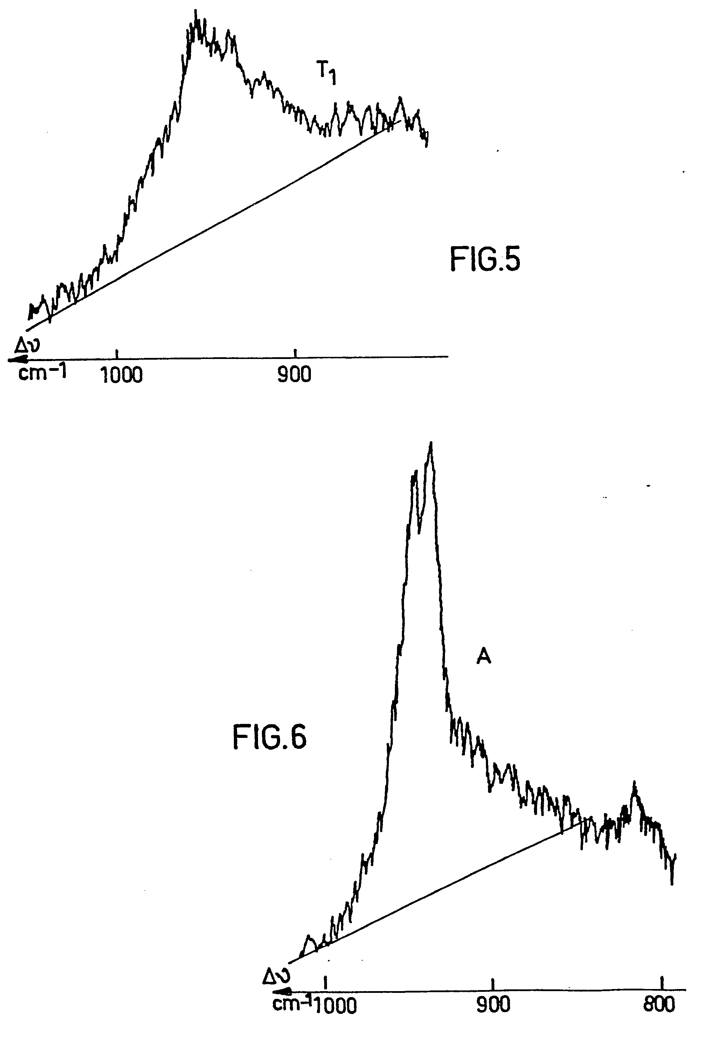

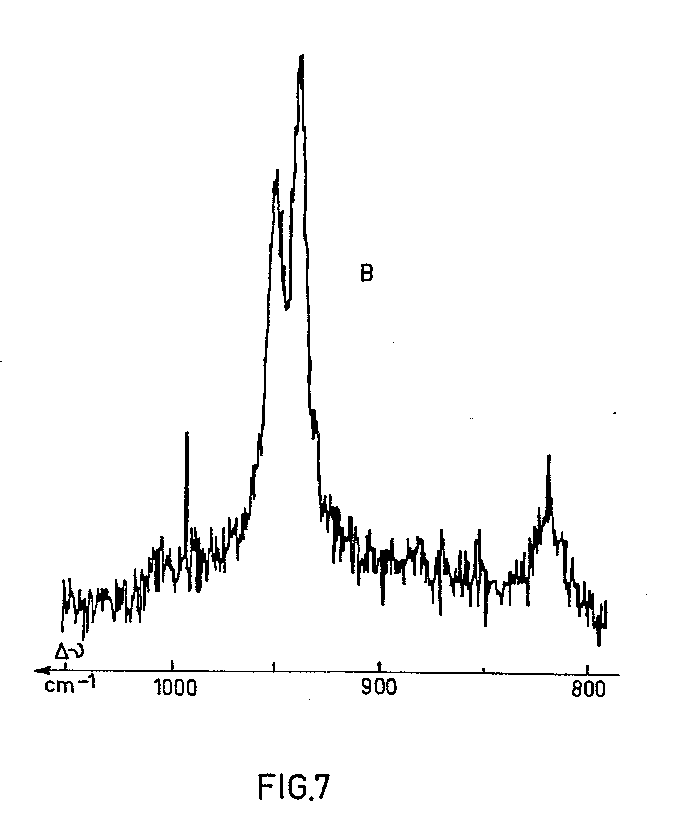

Les spectres de ces catalyseurs limités à la zone de fréquence 900–1020 $cm^{-1}$ sont représentés sur les figures 1 à 7. Les figures 1 à 4 correspondent à la spectroscopie conventionnelle et les figures 5 à 7 à la microscopie.

On constate que les pics correspondant aux catalyseurs selon l'invention (figures 3 et 4 et figures 6 et 7) ont une forme beaucoup plus fine que ceux des catalyseurs témoins (figures 1 et 2 et figure 5).

De ces figures, on peut calculer la répartition des fréquences des raies qui est donnée dans le Tableau II ci-après.

Tableau 2

| Catalyseur | Spectroscopie Raman conventionnelle % des fréquences | | | Microscopie Raman % des fréquences | | |
|---|---|---|---|---|---|---|
| | 900–930 cm⁻¹ | 930–955 cm⁻¹ | 955–1020 cm⁻¹ | 900–930 cm⁻¹ | 930–955 cm⁻¹ | 955–1020 cm⁻¹ |
| T1 | 25 | 22 | 53 | 24 | 34 | 42 |
| T2 | 25 | 28 | 47 | Etude non effectuée | | |
| A | 25 | 41 | 34 | 24 | 53 | 23 |
| B | 18 | 43 | 39 | 9 | 74 | 16 |

**Exemple 2**

Cet exemple concerne l'hydrodésulfuration d'une charge d'hydrocarbures constituée par le résidu sous vide d'un pétrole brut «KIRKOUK», dont le point d'ébullition sous pression atmosphérique est supérieur à 525°C.

Ses caractéristiques sont les suivantes:
- Densité à 15°C          1,0205,
- Viscosité à 100°C       750 centistokes,
- Teneur en soufre        5,1% en poids,
- Teneur en azote         0,36% en poids,
- Teneur en nickel        55 ppm,
- Teneur en vanadium      121 ppm,
- Teneur en asphaltènes (selon norme AFNOR T60-115)    7,3% en poids,
- Résidu CONRADSON (selon norme AFNOR T60-116)    18% en poids.

Les essais sont effectués de la façon suivante.

On utilise une unité pilote à recycle de gaz et à soutirage en continu. Le volume de catalyseur est de 150 cm³.

Avant le test proprement dit, on présulfure le catalyseur avec un gazole, dont l'intervalle de distillation est compris entre 250 et 380°C et contenant 1,3% en poids de soufre.

Cette présulfuration est effectuée sous une pression d'hydrogène de 24 bars, à une vitesse spatiale horaire de 3 et un taux hydrogène/charge de 200 normaux-litres/litre. On augmente en 24 heures la température progressivement, de façon à atteindre 375°C.

Les conditions opératoires des tests proprement dits sont les suivantes:
- pression d'hydrogène        140 bars,
- pression totale             150 bars,
- pression d'hydrogène sulfuré  6 bars,
- vitesse spatiale horaire    0,5,
- rapport hydrogène/hydrocarbures    1000 normaux-litres/litre.

On maintient la température de façon à obtenir une teneur en soufre dans l'effluent de 1,5% en poids.

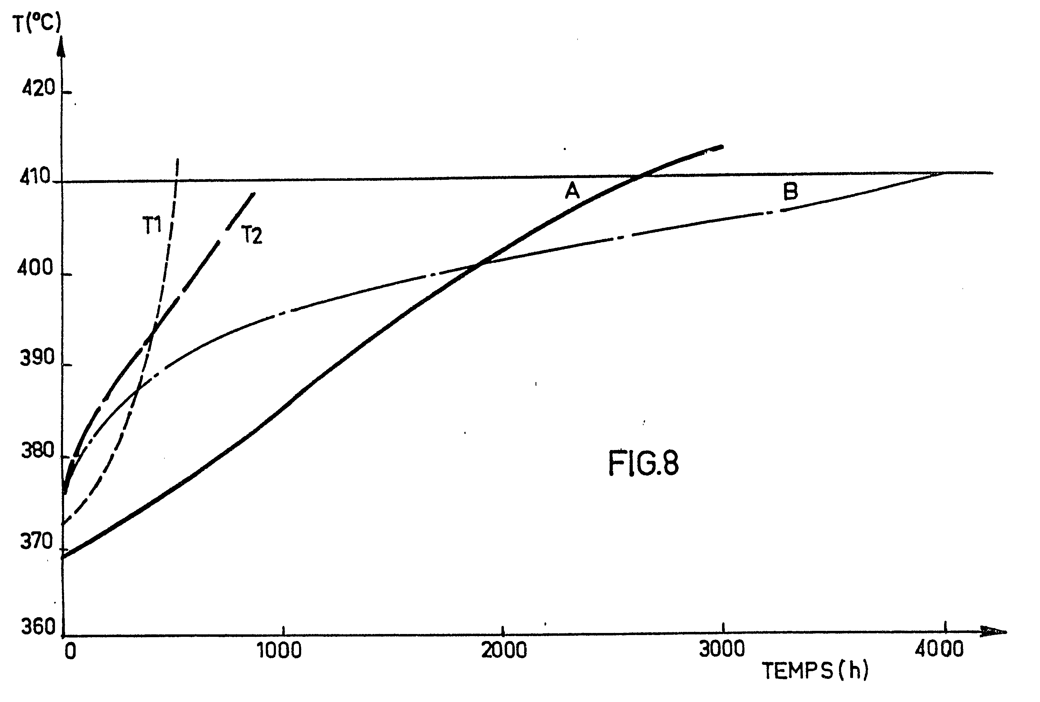

La baisse d'activité du catalyseur est compensée par une augmentation régulière de la température. On arrête l'essai à 410°C. L'évolution de la température en fonction du temps est représentée sur la figure 8.

On constate que les catalyseurs A et B selon l'invention ont une excellente résistance vis-à-vis de l'empoisonnement des contaminants contenus dans la charge contrairement aux catalyseurs T1 et T2.

Les essais ont été conduits dans des conditions telles que les taux de démétallisation et de déazotation sont respectivement:
- pour le vanadium: 83%,
- pour le nickel: 70%,
- pour l'azote: 55%.

**Revendications**

1. Catalyseurs d'hydrotraitement d'hydrocarbures comprenant:
   a) un support en oxyde minéral réfractaire,
   b) sous forme libre ou combinée, de 0,5 à 30% en poids et, de préférence, de 5 à 25% en poids, rapporté au poids total du catalyseur, de molybdène,
   c) sous forme libre ou combinée, de 0,5 à 10% en poids et, de préférence, de 1 à 8% en poids, rapporté au poids total du catalyseur, d'au moins un métal choisi dans le groupe constitué par le nickel et le cobalt,
   lesdits catalyseurs étant caractérisés en ce que les raies du spectre obtenu en les étudiant par spectroscopie Raman conventionnelle et de fréquence allant de 900 à 1020 cm⁻¹ ont la distribution suivante:
   - 25% au plus ont une fréquence comprise entre 900 et 930 cm⁻¹,
   - au moins 40% ont une fréquence comprise entre 930 et 955 cm⁻¹,
   - 40% au plus ont une fréquence comprise entre 955 et 1020 cm⁻¹.

2. Procédé de traitement, en présence d'hydrogène, d'une charge d'hydrocarbures ayant un point d'ébullition supérieur à 350°C, caractérisé en ce qu'on met en présence ladite charge et un catalyseur selon la revendication 1.

3. Procédé de désulfuration, en présence d'hydrogène, d'une charge d'hydrocarbures ayant un point d'ébullition supérieur à 350°C, caractérisé en ce qu'on met en présence ladite charge et un catalyseur selon la revendication 1.

4. Procédé de démétallisation, en présence d'hydrogène, d'une charge d'hydrocarbures ayant un point d'ébullition supérieur à 350°C, caractérisé en ce qu'on met en présence ladite charge et un catalyseur selon la revendication 1.

**Claims**

1. Catalysts for the hydro treatment of hydrocarbons comprising:
   a. a refractory mineral oxide support,

b. in free or combined form, from 0.5 to 30% by weight and, preferably, from 5 to 25% by weight, related to the total weight of the catalyst, of molybdenum,

c. in free or combined form, from 0.5 to 10% by weight and, preferably, from 1 to 8% by weight, related to the total weight of the catalyst, of at least one metal chosen from the group formed by nickel and cobalt, said catalysts being characterized in that the spectrum lines obtained when studying them by conventional Raman spectroscopy and at a frequency going from 900 to 1020 cm$^{-1}$ have the following distribution:

– 25% at most have a frequency between 900 and 930 cm$^{-1}$,

– at least 40% have a frequency between 930 and 955 cm$^{-1}$,

– 40% at most have a frequency between 955 and 1020 cm$^{-1}$.

2. A process for treating, in the presence of hydrogen, a hydrocarbon charge having a boiling point higher than 350 °C, characterized in that said charge is placed in the presence of a catalyst according to claim 1.

3. A process for the desulphurization, in the presence of hydrogen, of a hydrocarbon charge having a boiling point greater than 350 °C, characterized in that said charge is placed in the presence of a catalyst according to claim 1.

4. A process for demetallizing, in the presence of hydrogen, a hydrocarbon charge having a boiling point greater than 350 °C, characterized in that said charge is placed in the presence of a catalyst according to claim 1.

**Patentansprüche**

1. Hydrierungskatalysatoren für Kohlenwasserstoffe mit

a) einem Träger aus feuerfestem, mineralischem Oxyd,

b) 0,5 bis 30 Gew.-%, vorzugsweise 5 bis 25 Gew.-%, bezogen auf das Katalysatorgesamtgewicht, an freiem oder gebundenem Molybdän,

c) 0,5 bis 10 Gew.-%, vorzugsweise 1 bis 8 Gew.-%, bezogen auf das Katalysatorgesamtgewicht, an mindestens einem freien oder gebundenen, aus der Gruppe bestehend aus Nickel und Kobalt ausgewählten Metall,

dadurch gekennzeichnet, dass die Linien des durch Untersuchung der Katalysatoren mittels der üblichen Raman-Spektroskopie erhaltenen Spektrums im Frequenzbereich von 900 bis 1020 cm$^{-1}$ die folgende Verteilung aufweisen:

– höchstens 25% haben eine Frequenz zwischen 900 und 930 cm$^{-1}$,

– mindestens 40% haben eine Frequenz zwischen 930 und 955 cm$^{-1}$,

– höchstens 40% haben eine Frequenz zwischen 955 und 1020 cm$^{-1}$.

2. Verfahren zur Behandlung einer Charge von Kohlenwasserstoffen mit einem Siedepunkt höher als 350 °C in Gegenwart von Wasserstoff, dadurch gekennzeichnet, dass die Charge mit einem Katalysator nach Anspruch 1 zusammengebracht wird.

3. Verfahren zur Entschwefelung einer Charge von Kohlenwasserstoffen mit einem Siedepunkt höher als 350 °C in Gegenwart von Wasserstoff, dadurch gekennzeichnet, dass die Charge mit einem Katalysator nach Anspruch 1 zusammengebracht wird.

4. Verfahren zur Entmetallisierung einer Charge von Kohlenwasserstoffen mit einem Siedepunkt höher als 350 °C in Gegenwart von Wasserstoff, dadurch gekennzeichnet, dass die Charge mit einem Katalysator nach Anspruch 1 zusammengebracht wird.

0 048 670

FIG.1

FIG.2

FIG.3

FIG.4

FIG.5

$T_1$

$\Delta\upsilon$
cm$^{-1}$    1000      900

FIG.6

A

$\Delta\upsilon$
cm$^{-1}$ 1000      900      800

FIG.7

FIG.8